# EUROPÄISCHE PATENTSCHRIFT

(11) **EP 1 764 292 B1**
(45) Veröffentlichungstag und Bekanntmachung des Hinweises auf die Patenterteilung: **11.03.2009**
(21) Anmeldenummer: 06018248.2
(22) Anmeldetag: 31.08.2006
(51) Int. Cl.: B62H 5/18, B62H 5/20, B62H 5/14

(54) **Bremsscheibenschloss**
Brake disk lock
Serrure pour frein à disque

(30) Priorität: 14.09.2005 DE 102005043927
(43) Veröffentlichungstag der Anmeldung: 21.03.2007
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A- 0 716 007
- FR-A- 2 861 683
- US-A- 5 507 160
- US-A- 5 530 427
- US-A- 5 736 924

## Beschreibung

Die Erfindung betrifft ein Bremsscheibenschloss, mit einem Schlosskörper, der eine Bremsscheibenaufnahme zur Aufnahme einer Bremsscheibe aufweist, einem Verriegelungsmechanismus, der wahlweise in eine Verriegelungsstellung oder eine Freigabestellung bringbar ist, einem Schließbolzen zum Sichern des Schlosses an der Bremsscheibe, wobei der Schließbolzen an dem Schlosskörper verriegelbar ist, indem der Verriegelungsmechanismus in die Verriegelungsstellung gebracht wird, einer Alarmeinrichtung zum Ausgeben eines Alarmsignals, wobei die Alarmeinrichtung einen Bewegungssensor aufweist, und einer Bremsscheibenerkennungseinrichtung zur Detektion, ob eine Bremsscheibe sich in der Bremsscheibenaufnahme befindet.

Ein derartiges Bremsscheibenschloss dient zum Sichern beispielsweise eines Motorrads, eines Motorrollers oder eines Quads gegen eine unbefugte Benutzung. Beispielsweise besitzt der Schlosskörper einen U-förmigen Aufbau, durch den ein Aufnahmespalt für eine Bremsscheibe begrenzt wird. Das Schloss wird derart an eine Bremsscheibe des geparkten Fahrzeugs angelegt, dass die Bremsscheibe in den Aufnahmespalt hineinragt. Daraufhin wird der Schließbolzen durch entsprechende Betätigung des Schlosses in eine Schließstellung bewegt, in der der Schließbolzen den Aufnahmespalt durchquert und dabei durch eine Belüftungsöffnung der Bremsscheibe geführt ist. Hierdurch ist das Schloss an der Bremsscheibe verriegelt, und die Benutzung des Fahrzeugs wird verhindert, bis das Schloss wieder von der Bremsscheibe gelöst wird. Es ist auch bekannt, das Schloss als ein Klobenschloss auszubilden, wobei als Bremsscheibenaufnahme eine Außenseite des Schlosskörpers vorgesehen ist, die an die Bremsscheibe angelegt wird. Anschließend wird der Schlosskörper an der Bremsscheibe gesichert, indem der als Kloben ausgebildete Schließbolzen von außen durch eine Belüftungsöffnung der Bremsscheibe hindurch in eine Klobenaufnahme des Schlosskörpers eingeführt und dort verriegelt wird. In beiden Fällen ist an dem Schlosskörper ein Verriegelungsmechanismus vorgesehen, durch den der Schließbolzen wahlweise in seiner Schließstellung verriegelt oder relativ zu dem Schlosskörper freigegeben werden kann. Der Verriegelungsmechanismus kann beispielsweise eine Schließkugel oder einen Schließriegel aufweisen, die bzw. der mit dem Schließbolzen in Eingriff gebracht wird.

Es ist ferner bekannt, ein derartiges Schloss mit einer Alarmeinrichtung mit Bewegungssensor zu versehen. Unter einem Bewegungssensor ist im Zusammenhang ein Sensor zu verstehen, der eine Beschleunigung, eine Erschütterung, eine Lageänderung oder eine sonstige Bewegung detektiert. Wenn der Bewegungssensor eine Bewegung des Schlosses detektiert, gibt die Alarmeinrichtung - sofern diese aktiviert ist - ein akustisches und/oder optisches Alarmsignal aus. Diese Alarmfunktion dient zum einen dazu, den befugten Benutzer des Fahrzeugs vor dem Losfahren ggf. daran zu erinnern, dass das Schloss noch an der Bremsscheibe verriegelt ist. Hierdurch wird also eine Beschädigung des Fahrzeugs vermieden, falls der Benutzer vergisst, vor dem Losfahren das Schloss von der Bremsscheibe zu entfernen. Zum anderen erfüllt die Alarmeinrichtung auch eine Diebstahlwarnfunktion, da Aufbruchversuche zwangsläufig mit einer gewissen Bewegung oder Erschütterung des Bremsscheibenschlosses verbunden sind und deshalb im Falle eines Aufbruchversuchs ebenfalls das Alarmsignal ausgegeben wird, wodurch eine Abschreckungswirkung erzielt wird.

Insbesondere für die erläuterte Benutzerwarnfunktion der Alarmeinrichtung ist es wichtig, dass bei Detektion einer Schlossbewegung das Alarmsignal rasch ausgegeben wird, um ggf. den befugten Benutzer noch rechtzeitig vor dem Losfahren warnen zu können. Andererseits ist es jedoch wünschenswert, ab dem Zeitpunkt der Detektion einer Schlossbewegung ein gewisses Verzögerungsintervall bis zum Ausgeben des Alarmsignals abzuwarten (so genanntes Bewegungsdetektions-Verzögerungsintervall). Auch das Öffnen des Bremsscheibenschlosses und das Deaktivieren der Alarmeinrichtung durch den befugten Benutzer sind nämlich mit einer gewissen Bewegung des Schlosses verbunden; diese unvermeidbar auftretende Bewegung soll jedoch nicht bei jedem befugten Öffnen des Schlosses zu einem sofortigen Alarmsignal führen.

Um bei dem bestimmungsgemäßen Gebrauch des Bremsscheibenschlosses die Alarmeinrichtung automatisch zu aktivieren und zu deaktivieren, ist es bekannt, das Schloss mit einer Bremsscheibenerkennungseinrichtung zu versehen. Diese bekannte Bremsscheibenerkennungseinrichtung überprüft, ob eine Bremsscheibe sich gerade in der Bremsscheibenaufnahme befindet, wobei zutreffendenfalls die Alarmeinrichtung aktiviert und andernfalls die Alarmeinrichtung deaktiviert ist. Beispielsweise ist eine optoelektronische Bremsscheibenerkennungseinrichtung für eine optische Überprüfung bekannt, ob eine Bremsscheibe in die Bremsscheibenaufnahme eingesetzt ist. Diese bekannte Bremsscheibenerkennungseinrichtung ermöglicht zwar eine automatische Aktivierung und Deaktivierung der Alarmeinrichtung, sie ist jedoch aufgrund des optischen Detektionsprinzips verschmutzungsanfällig, so dass die Gefahr einer Fehlfunktion besteht.

Ein Bremsscheibenschloss gemäß dem Oberbegriff des Anspruchs 1 ist aus einer offenkundigen Vorbenutzung eines Schlosses des Typs "XENA XM1/XM3" bekannt.

Es ist Aufgabe der Erfindung, ein Bremsscheibenschloss der erläuterten Art derart weiterzubilden, dass die Alarmeinrichtung auf zuverlässige und funktionsgerechte Weise automatisch aktiviert und deaktiviert wird.

Diese Aufgabe wird durch ein Bremsscheibenschloss mit den Merkmalen des Anspruchs 1 gelöst, und insbesondere dadurch, dass die Alarmeinrichtung, die Bremsscheibenerkennungseinrichtung und der Verriegelungsmechanismus dergestalt zusammenwirken, dass die Alarmeinrichtung nur unter der Voraussetzung aktiviert ist, dass die Bremsscheibenerkennungseinrichtung das Vorhandensein einer Bremsscheibe in der Bremsscheibenaufnahme detektiert und der Verriegelungsmechanismus in die Verriegelungsstellung gebracht ist.

Bei dem erfindungsgemäßen Bremsscheibenschloss ist also eine "UND"-Kopplung der Bremsscheibenerkennungseinrichtung und des Verriegelungsmechanismus derart vorgesehen, dass die Alarmeinrichtung nur dann aktiviert ist, wenn eine Bremsscheibe sich in der Bremsscheibenaufnahme befindet und wenn zugleich der Verriegelungsmechanismus sich in der Verriegelungsstellung befindet, um den Schließbolzen an dem Schlosskörper zu verriegeln. Umgekehrt bedeutet dies, dass die Alarmeinrichtung dadurch deaktiviert wird, dass entweder die Bremsscheibenerkennungseinrichtung keine Bremsscheibe in der Bremsscheibenaufnahme mehr detektiert oder der Verriegelungsmechanismus sich nicht mehr in der Verriegelungsstellung befindet.

Durch eine derartige Verknüpfung des Zustands der Bremsscheibenerkennungseinrichtung mit dem Zustand des Verriegelungsmechanismus für die Aktivierung der Alarmeinrichtung wird erreicht, dass die Alarmeinrichtung nur dann aktiviert wird, wenn dies für den bestimmungsgemäßen Gebrauch des Bremsscheibenschlosses tatsächlich erforderlich ist, und dass gleichwohl eine sehr schnelle Deaktivierung der Alarmeinrichtung möglich ist.

Gegenüber bekannten Bremsscheibenschlössern, bei denen die automatische Aktivierung der Alarmeinrichtung allein durch ein entsprechendes Signal der Bremsscheibenerkennungseinrichtung ausgelöst wird (z.B. optische Bremsscheibenerkennung), besteht ein Vorteil der erfindungsgemäßen gekoppelten Aktivierung der Alarmeinrichtung darin, dass eine vergleichsweise schnelle Deaktivierung der Alarmeinrichtung durch den befugten Benutzer möglich ist. Die Alarmeinrichtung wird nämlich bereits dadurch automatisch deaktiviert, dass der befugte Benutzer den Verriegelungsmechanismus des Schlosses aus der Verriegelungsstellung in die Freigabestellung überführt. Die Deaktivierung der Alarmeinrichtung tritt also nicht erst dann ein, wenn nach einem derartigen Entriegeln des Schließbolzens und nach dem Zurückführen des Schließbolzens in seine Öffnungsstellung das Bremsscheibenschloss von der Bremsscheibe abgenommen worden ist und die Bremsscheibenerkennungseinrichtung dies detektiert. Somit kann das eingangs erläuterte Bewegungsdetektions-Verzögerungsintervall zwischen der Detektion einer Schlossbewegung und dem Ausgeben eines Alarmsignals entsprechend kurz gewählt werden. Dies wirkt sich wiederum vorteilhaft auf die erläuterte Benutzerwarnfunktion der Alarmeinrichtung aus, nämlich um den befugten Benutzer vor dem Losfahren möglichst frühzeitig zu warnen, falls vergessen wurde, das Schloss von der Bremsscheibe abzunehmen.

Ein weiterer Vorteil der erfindungsgemäßen "UND"-Kopplung ist darin zu sehen, dass die automatische Aktivierung der Alarmeinrichtung nicht unerwünscht ausgelöst wird. Falls beispielsweise eine automatische Aktivierung der Alarmeinrichtung allein durch den Verriegelungsmechanismus verursacht wird - also indem der Verriegelungsmechanismus in die Verriegelungsstellung gebracht wird -, so kann das Bremsscheibenschloss von dem befugten Benutzer nicht im leer verriegelten Zustand mitgeführt bzw. transportiert werden, ohne dass die hierbei zwangsläufig auftretenden Erschütterungen vom Bewegungssensor erfasst werden und zur Ausgabe eines Alarmsignals führen. Das Schloss dürfte in diesem Fall also nur bei freigegebenem Verriegelungsmechanismus transportiert werden, was vom Benutzer jedoch leicht vergessen werden kann.

Die erläuterte "UND"-Kopplung der Bremsscheibenerkennungseinrichtung und des Verriegelungsmechanismus für das automatische Aktivieren der Alarmeinrichtung kann insbesondere auf elektrische oder elektronische Weise verwirklicht werden, beispielsweise indem das Signal eines Sensors oder eines Schalters der Bremsscheibenerkennungseinrichtung mit dem Signal eines Sensors oder Schalters logisch verknüpft wird, das den Zustand des Verriegelungsmechanismus wiedergibt (Verriegelungsstellung oder Freigabestellung).

Um einen möglichst einfachen, robusten und zuverlässigen Aufbau des Bremsscheibenschlosses zu erhalten, ist es jedoch bevorzugt, wenn das Schloss einen Schalter zum Aktivieren und Deaktivieren der Alarmeinrichtung aufweist, wobei die Bremsscheibenerkennungseinrichtung mit dem Schalter mechanisch gekoppelt ist und der Schalter mittels des Verriegelungsmechanismus direkt oder indirekt mechanisch betätigbar ist. Bei dieser Ausführungsform ist also eine mechanische Kopplung zwischen der Bremsscheibenerkennungseinrichtung und dem Verriegelungsmechanismus über einen einzigen gemeinsamen Schalter vorgesehen, wobei dieser Schalter zum Aktivieren der Alarmeinrichtung betätigt wird, wenn eine Bremsscheibe in die Bremsscheibenaufnahme gebracht ist und der Verriegelungsmechanismus in die Verriegelungsstellung gebracht ist. Insbesondere kann diese mechanische Kopplung derart realisiert sein, dass die Bremsscheibenerkennungseinrichtung den Schalter aus einer Ruhestellung in eine Bereitschaftsstellung bewegt, wenn eine Bremsscheibe in die Bremsscheibenaufnahme gebracht wird, wobei der Schalter lediglich in der Bereitschaftsstellung mittels des Verriegelungsmechanismus betätigt werden kann.

Zur Verwirklichung der genannten mechanischen Kopplung besitzt die Bremsscheibenerkennungseinrichtung vorzugsweise einen beweglichen Tastabschnitt, der bei freier Bremsscheibenaufnahme aus dem Schlosskörper in die Bremsscheibenaufnahme hineinragt und der dergestalt mit dem Schalter direkt oder indirekt verbunden ist, dass durch Einführen einer Bremsscheibe in die Bremsscheibenaufnahme der Tastabschnitt in Richtung des Schlosskörpers versetzt wird und der Schalter hierdurch in die bereits genannte Bereitschaftsstellung gebracht wird, in der der Schalter nun mit dem Verriegelungsmechanismus zusammenwirken kann, um den Verriegelungszustand des Schlosses zu detektieren. Eine derartige mechanische Kopplung gestattet es, die Aktivierung der Alarmeinrichtung von dem Vorhandensein einer Bremsscheibe in der Bremsscheibenaufnahme und zugleich von dem Zustand des Verriegelungsmechanismus unter Verwendung eines einzigen Schalters abhängig zu machen. Da die Bremsscheibenerkennungseinrichtung bei dieser Ausführungsform die Bremsscheibenaufnahme mechanisch abtastet, ist die Gefahr eines Störeinflusses durch eventuelle Verschmutzungen geringer als bei der eingangs genannten bekannten optischen Detektion der Bremsscheibe.

Besonders vorteilhaft ist es, wenn der genannte Tastabschnitt der Bremsscheibenerkennungseinrichtung bezüglich der Bremsscheibenaufnahme konvex gewölbt ist, insbesondere in Form einer balligen Wippe. Hierdurch kann der Tastabschnitt an einen großen Bereich möglicher unterschiedlicher Dicken der zu detektierenden Bremsscheibe angepasst sein. Vor allem wird - im Gegensatz beispielsweise zu einer einzelnen vorgespannten Kugel, die die Bremsscheibenaufnahme abtastet - vermieden, dass der Tastabschnitt zufällig in eine Belüftungsöffnung der Bremsscheibe eingreift und dass das Vorhandensein dieser Bremsscheibe deshalb fälschlicherweise nicht detektiert wird. Zu diesem Zweck ist es bevorzugt, wenn der konvex gewölbte Tastabschnitt sich entlang zumindest eines Drittels oder sogar der Hälfte der Länge der Bremsscheibenaufnahme erstreckt und/oder wenn der Krümmungsradius der konvexen Wölbung mindestens 1 cm beträgt.

Gemäß einer bevorzugten Weiterbildung sind der Schalter und der Tastabschnitt der Bremsscheibenerkennungseinrichtung zueinander beweglich gelagert, wobei durch Versetzen des Tastabschnitts in Richtung des Schlosskörpers der Schalter zu einer Relativbewegung bezüglich des Tastabschnitts und/oder zu einer Relativbewegung bezüglich des Verriegelungsmechanismus des Schlosses antreibbar ist. Bei dieser Weiterbildung wirken der Schalter und der Tastabschnitt über eine Zwangsführung dergestalt zusammen, dass durch ein andauerndes Versetzen des Tastabschnitts in Richtung des Schlosskörpers bei dem Einführen einer Bremsscheibe in die Bremsscheibenaufnahme zunächst der Schalter eine Bewegung in Richtung der genannten Bereitschaftsstellung ausführt und der Schalter sich nach Erreichen dieser Bereitschaftsstellung nur noch geringfügig oder überhaupt nicht mehr bewegt. Mit anderen Worten ist für das Zusammenwirken des Schalters und des Tastabschnitts eine Zwangsführung derart vorgesehen, dass der Schalter bereits durch eine geringfügige Betätigung des Tastabschnitts in die Bereitschaftsstellung bewegt wird und nach Erreichen dieser Bereitschaftsstellung diese jedoch im Wesentlichen beibehält, ungeachtet einer eventuellen weiteren Bewegung des Tastabschnitts. Durch eine derartige Zwangsführung ist gewährleistet, dass auch das Einführen einer vergleichsweise dünnen Bremsscheibe in die Bremsscheibenaufnahme bereits dazu führt, dass der Schalter in die Bereitschaftsstellung gebracht wird, wobei auch das Einführen einer vergleichsweise dicken Bremsscheibe in die Bremsscheibenaufnahme nicht dazu führt, dass der Schalter über die Bereitschaftsstellung hinaus bewegt wird.

Das im Zusammenhang mit der Erfindung erläuterte Zusammenwirken des Schalters mit der Bremsscheibenerkennungseinrichtung (z.B. Tastabschnitt) oder dem Verriegelungsmechanismus (z.B. Riegelelement) muss nicht unmittelbar erfolgen, sondern es kann natürlich auch eine indirekte Kopplung über Zwischenglieder vorgesehen sein, beispielsweise indem der Schalter an einer Schalteraufnahme oder dergleichen befestigt ist, die mit der Bremsscheibenerkennungseinrichtung und/oder dem Verriegelungsmechanismus des Schlosses gekoppelt ist.

Gemäß einer vorteilhaften Weiterbildung ist der Schalter an einem Anlenkungspunkt an dem Schlosskörper oder an der Bremsscheibenerkennungseinrichtung angelenkt, und zur Verwirklichung der genannten Zwangsführung sind eine Führungsbahn und ein hiermit zusammenwirkender Führungszapfen an dem Tastabschnitt einerseits und dem Schalter andererseits vorgesehen, oder umgekehrt. Diese Führungsbahn besitzt zumindest einen ersten Führungsabschnitt und einen zweiten Führungsabschnitt, wobei diese Führungsabschnitte bezüglich der Bewegungsrichtung der Führungsbahn relativ zu dem Führungszapfen unterschiedlich geneigt sind. Hierdurch kann die Abhängigkeit der Position des Schalters von der Relativlage bezüglich des Tastabschnitts besonders einfach in der erwünschten Weise vorbestimmt werden. Beispielsweise kann der erste Führungsabschnitt schräg und der zweite Führungsabschnitt im Wesentlichen parallel zu gemeinsamen Relativbewegungsrichtung verlaufen, um hierdurch zu bewirken, dass eine Relativbewegung zwischen dem Tastabschnitt und dem Schalter zunächst zu einer starken und anschließend allenfalls zu einer geringen Bewegung des Schalters führt.

Gemäß einer weiteren vorteilhaften Weiterbildung der Erfindung besitzt das Schloss eine Energiequelle zur Energieversorgung der Alarmeinrichtung einschließlich des Bewegungssensors und einer eventuell vorhandenen Steuerschaltung, wobei durch das Ausschalten des genannten Schalters die Energieversorgung der Alarmeinrichtung vollständig abgeschaltet wird und die Alarmeinrichtung hierdurch deaktiviert wird. Mit anderen Worten muss eine Steuerschaltung der Alarmeinrichtung nicht etwa ständig den Schaltzustand des Schalters überwachen, und auch der Bewegungssensor muss nicht ständig betriebsbereit sein. Stattdessen wird allein durch mechanische Betätigung des Schalters die gesamte Alarmeinrichtung "aufgeweckt". Hierdurch wird also bewirkt, dass die Alarmeinrichtung keine elektrische Energie verbraucht, wenn die Alarmeinrichtung deaktiviert ist. Die Lebensdauer der Energiequelle (Batterie, Akkumulator) wird hierdurch erheblich verlängert.

In diesem Zusammenhang ist es bevorzugt, wenn durch das Einschalten der Energieversorgung der Alarmeinrichtung automatisch das Abwarten eines vorbestimmten Einschalt-Verzögerungsintervalls ausgelöst wird, wobei während dieses Verzögerungsintervalls kein Alarmsignal ausgegeben wird, selbst wenn der Bewegungssensor eine Bewegung des Schlosses detektiert. Diese Funktion kann beispielweise durch ein entsprechend konfiguriertes Steuerprogramm der Alarmeinrichtung verwirklicht werden, das in einem nichtflüchtigen Speicher der Alarmeinrichtung abgelegt ist. Durch eine derartige Konfigurierung ist gewährleistet, dass der befugte Benutzer das Schloss nach dem Einschalten des Schalters und der hiermit verbundenen Aktivierung der Alarmeinrichtung noch bewegen kann, ohne hierdurch ein Alarmsignal auszulösen. Dies ist von Vorteil, wenn der Benutzer das Schloss an einer Bremsscheibe verriegelt und das Schloss unmittelbar nach der entsprechenden Betätigung des Verriegelungsmechanismus noch geringfügig bewegt, beispielsweise um einen Schlüssel von dem Schloss abzuziehen. Dieses Einschalt-Verzögerungsintervall kann größer gewählt sein als das bereits erläuterte Bewegungsdetektions-Verzögerungsintervall, das im übrigen Betrieb der Alarmeinrichtung - also nach Ablauf des Einschalt-Verzögerungsintervalls - berücksichtigt wird.

Weitere Ausführungsformen der Erfindung sind in den Unteransprüchen genannt.

Die Erfindung wird nachfolgend lediglich beispielhaft unter Bezugnahme auf die Zeichnungen erläutert.
- Fig. 1: zeigt eine Seitenansicht eines Bremsscheibenschlosses.
- Fig. 2: zeigt eine Explosionsansicht von Teilen des Bremsscheibenschlosses.
- Fig. 3: zeigt eine Perspektivansicht einer Bremsscheibendetektionseinrichtung mit einem Schalter.
- Fig. 4a und 4b: zeigen Querschnittsansichten des Schlosses, wobei der Schalter sich in einer Ruhestellung bzw. einer Bereitschaftsstellung befindet.

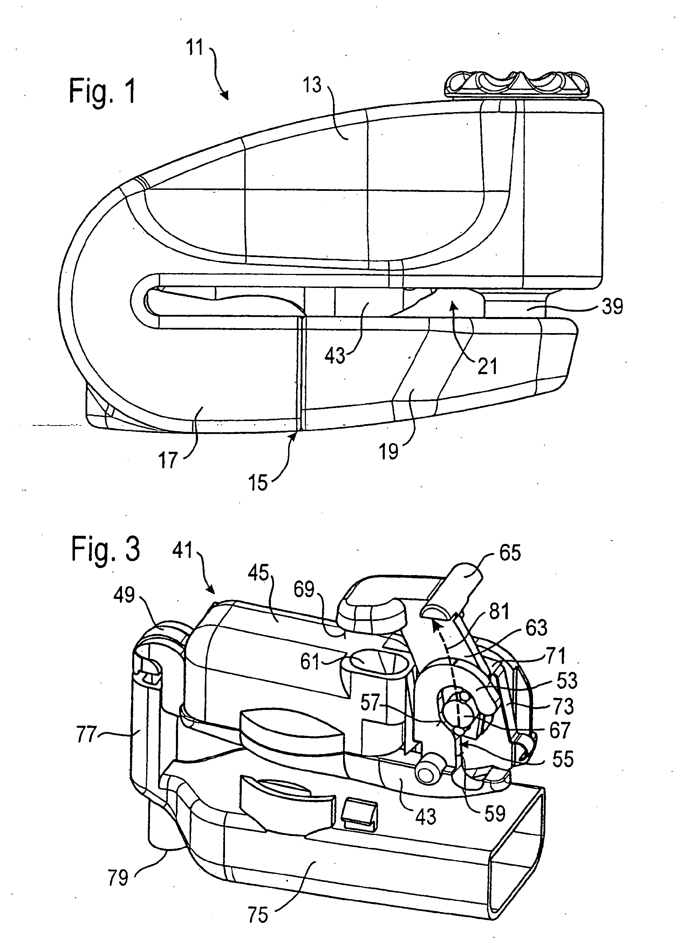

In den Figuren ist ein Ausführungsbeispiel eines erfindungsgemäßen Bremsscheibenschlosses gezeigt. Dieses besitzt einen Schlosskörper 11 mit einem im Wesentlichen U-förmigen Aufbau (vgl. Fig. 1). Der eine Schenkel dieser U-Form bildet einen oberen Gehäuseabschnitt 13, und der andere U-Schenkel bildet einen unteren Gehäuseabschnitt 15. Der letztere ist zweiteilig ausgebildet, mit einem hinteren Längsabschnitt 17, der mit dem oberen Gehäuseabschnitt 13 einstückig verbunden ist, und mit einem vorderen Längsabschnitt 19, der an dem hinteren Längsabschnitt 17 befestigt ist. Der obere Gehäuseabschnitt 13 und der untere Gehäuseabschnitt 15 des Schlosskörpers 11 begrenzen einen Aufnahmespalt 21 zur Aufnahme einer Bremsscheibe eines Motorrads oder dergleichen.

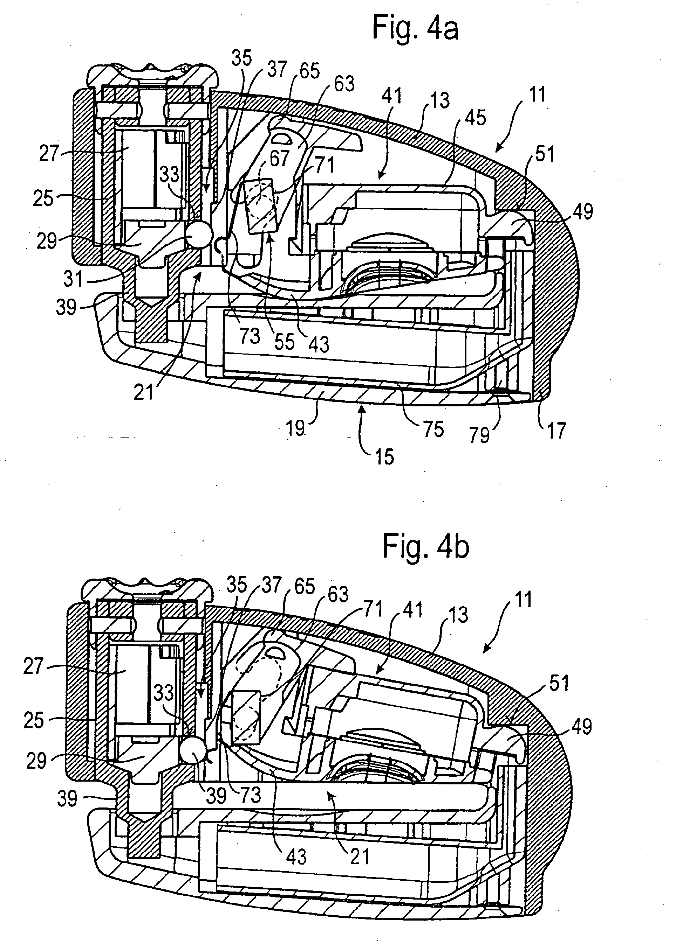

An dem oberen Gehäuseabschnitt 13 ist ein im Wesentlichen hohlzylindrischer Schließbolzen 25 gelagert. Dieser beherbergt einen Schließzylinder 27 (vgl. Fig. 4a und 4b), der von der Oberseite des Schließbolzens 25 aus mittels eines zugeordneten Schlüssels (nicht gezeigt) drehbetätigt werden kann. Der Schließzylinder 27 ist an seiner Unterseite mit einem drehbar gelagerten Mitnehmer 29 gekoppelt. Dieser wirkt über eine Führungsfläche, die bezüglich der Drehachse des Mitnehmers 29 exzentrisch verläuft, mit einer Schließkugel 31 zusammen, die in einer Bohrung 33 an der Mantelfläche des Schließbolzens 25 angeordnet ist. Der Schließzylinder 27, der Mitnehmer 29 und die Schließkugel 31 bilden gemeinsam den Verriegelungsmechanismus des Schlosses. In Fig. 4a und 4b ist die Schließstellung des Schließbolzens 25 gezeigt, in der die Bohrung 33 benachbart zu einer Verriegelungsnut 35 des oberen Gehäuseabschnitts 13 angeordnet. Diese Verriegelungsnut 35 besitzt eine zentrale Durchbrechung 37.

Die Unterseite des Schließbolzens 25 ist zu einem Riegelabschnitt 39 verjüngt. In der in Fig. 4a und 4b gezeigten Schließstellung des Schließbolzens 25 durchquert der Riegelabschnitt 39 den Aufnahmespalt 21 und greift in den unteren Gehäuseabschnitt 15 ein, so dass der Aufnahmespalt 21 hierdurch verschlossen ist.

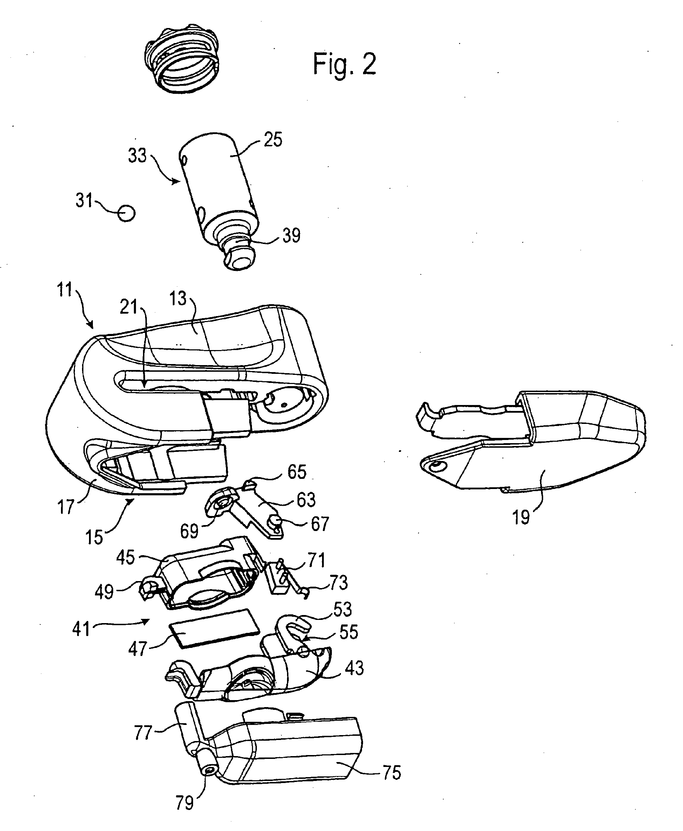

Der obere Gehäuseabschnitt 13 und der untere Gehäuseabschnitt 15 des Schlosskörpers 11 sind teilweise hohl und zum Aufnahmespalt 21 hin geöffnet ausgebildet. In den oberen Gehäuseabschnitt 13 ist eine Bremsscheibenerkennungswippe 41 eingesetzt. Diese besitzt einen ballig ausgebildeten Tastabschnitt 43, der in dem in Fig. 4a gezeigten Zustand in den Aufnahmespalt 21 hineinragt. Ferner besitzt die Bremsscheibenerkennungswippe 41 einen Gehäuseabschnitt 45, der an der Oberseite des Tastabschnitts 43 befestigt, beispielsweise verrastet ist. Die Bremsscheibenerkennungswippe 41 beherbergt eine Platine 47 (vgl. Fig. 2). An dieser sind ein Bewegungssensor, eine Steuerschaltung und die hierfür erforderlichen Verbindungsleitungen angeordnet (nicht gezeigt). Die Platine 47 bildet somit eine Alarmeinrichtung, deren Funktionsweise nachfolgend noch genauer erläutert wird. Die Platine 47 bzw. die daran angeordnete Steuerschaltung ist mit einem Piezo-Signalgeber verbunden (nicht gezeigt), der ebenfalls an der Bremsscheibenerkennungswippe 41 befestigt ist.

An der Rückseite der Bremsscheibenerkennungswippe 41 ist ein Anlenkansatz 49 ausgebildet, der an einem Lagerungsabsatz 51 an der Innenseite des oberen Gehäuseabschnitts 13 anliegt. An der Vorderseite weist die Bremsscheibenerkennungswippe 41 einen Halte- und Führungshaken 53 auf. Dieser besitzt eine in Richtung des Schließklobens 25 weisende Stirnseite, die als Führungsbahn 55 dient und einen oberen ersten Führungsabschnitt 57 und einen unteren zweiten Führungsabschnitt 59 besitzt (vgl. Fig. 3). An der Vorderseite der Bremsscheibenerkennungswippe 41 - und zwar an der Oberseite - ist ferner eine Federaufnahme 61 ausgebildet.

Die Bremsscheibenerkennungswippe 41 ist mit einer Schalterhalterung 63 verbunden. Diese besitzt eine oberseitige Anlenkrundung 65, einen seitlich abstehenden Führungszapfen 67 und eine Federaufnahme 69, die in Richtung der Federaufnahme 61 der Bremsscheibenerkennungswippe 41 weist. An der Schalterhalterung 63 ist ein Kontaktschalter 71 mit einem Federelement 73 befestigt.

Die Schalterhalterung 63 und die Bremsscheibenerkennungswippe 41 sind mittels einer Druckfeder (nicht gezeigt), die mit einem Ende in die Federaufnahme 61 und mit dem anderen Ende in die Federaufnahme 69 eingreift, gegenseitig vorgespannt. Die Schalterhalterung 63 wird dabei durch einen Eingriff des Führungszapfens 67 in den Halte- und Führungshaken 53 an der Bremsscheibenerkennungswippe 41 gehalten (vgl. Fig. 3). Die somit gebildete Einheit aus Bremsscheibenerkennungswippe 41 und Schalterhalterung 63 ist dergestalt in den Innenraum des oberen Gehäuseabschnitts 13 des Schlosskörpers 11 eingesetzt, dass nicht nur der Anlenkansatz 49 der Bremsscheibenerkennungswippe 41 an dem Lagerungsabsatz 51 des oberen Gehäuseabschnitts 13 anliegt, sondern auch die Anlenkrundung 65 der Schalterhalterung 63 an der Innenwand des oberen Gehäuseabschnitts 13 anliegt (vgl. Fig. 4a und 4b). Der Kontaktschalter 71 ist dabei derart ausgerichtet, dass das Federelement 73 in Richtung des Schließbolzens 25 und insbesondere in Richtung der Verriegelungsnut 35 weist.

In den unteren Gehäuseabschnitt 15 des Schlosskörpers 11 ist ein Batteriegehäuse 75 eingesetzt. Dieses beherbergt eine Batterie (nicht gezeigt) zur Energieversorgung der genannten Alarmeinrichtung (Platine 47). An der Rückseite des Batteriegehäuses 75 ist ein Kabelführungsansatz 77 angeformt. Dessen Oberseite hält im montierten Zustand des Schlosses den Anlenkansatz 49 der Bremsscheibenerkennungswippe 41 an dem oberen Gehäuseabschnitt 13 gefangen (vgl. Fig. 4a und 4b). Der vordere Längsabschnitt 19 des unteren Gehäuseabschnitts 15 ist an einer Gewindebohrung 79 des Batteriegehäuses 75 verschraubt.

Die elektrischen Verbindungen des Bremsscheibenschlosses sind in den Figuren nicht im Einzelnen gezeigt. Letztlich ist die genannte Batterie über den Kontaktschalter 41 mit der genannten Steuerschaltung an der Platine 47 verbunden, wobei die Steuerschaltung mit dem genannten Bewegungssensor verbunden ist, um diesen ggf. mit Strom zu versorgen und um dessen Signale auszulesen, und wobei die Steuerschaltung ferner mit dem genannten Piezo-Signalgeber verbunden ist, um diesen ggf. zum Ausgeben eines akustischen Alarmsignals anzusteuern.

Das in den Figuren gezeigte Schloss dient auf an sich bekannte Weise zum Blockieren einer Bremsscheibe eines Motorrads oder dergleichen und somit zur Sicherung des Motorrads gegen unbefugte Benutzung. Hierfür wird das Schloss derart auf die Bremsscheibe aufgesetzt, dass die Bremsscheibe in den Aufnahmespalt 21 hineinragt und der Riegelabschnitt 39 des Schließbolzens 25 eine Belüftungsöffnung der Bremsscheibe durchqueren kann, um hierdurch den Aufnahmespalt 21 zu verschließen und das Schloss an der Bremsscheibe zu sichern.

Der Verriegelungsmechanismus des gezeigten Schlosses funktioniert wie folgt: Um das Schloss auf eine Bremsscheibe aufsetzen zu können, befindet sich der Schließbolzen 25 zunächst in einer Öffnungsstellung, in der der Riegelabschnitt 39 vollständig aus dem Aufnahmespalt 21 zurückgezogen ist. Der Verriegelungsmechanismus des Schlosses nimmt eine Freigabestellung ein, in der die Schließkugel 31 bezüglich der Verriegelungsnut 35 nach oben und seitlich versetzt angeordnet ist.

Ausgehend von dieser Freigabestellung bewegt der Benutzer den Schließbolzen 25 axial nach unten, bis der Riegelabschnitt 39 in den unteren Gehäuseabschnitt 15 des Schlosskörpers 11 eingreift. Anschließend führt der Benutzer mittels des in den Schließzylinder 27 eingeführten Schlüssels eine Drehbetätigung aus. Dieser bewirkt zunächst eine Drehbewegung des Schließbolzens 25, der Bohrung 33 und der darin gehaltenen Schließkugel 31. Nachfolgend bewirkt die Drehbetätigung, dass durch eine Drehung des Mitnehmers 29 relativ zu dem Schließbolzen 25 die Schließkugel 31 in die Verriegelungsnut 35 gedrängt wird. Der Schließbolzen 25 befindet sich jetzt in der in Fig. 4a und 4b gezeigten Schließstellung. Aufgrund des Eingriffs der Schließkugel 31 in die Bohrung 33 des Schließbolzens 25 einerseits und in die Verriegelungsnut 35 des oberen Gehäuseabschnitts 13 andererseits ist der Schließbolzen in der gezeigten Schließstellung gesichert, d.h. der Verriegelungsmechanismus des Schlosses nimmt jetzt die Verriegelungsstellung ein.

Um das Schloss wieder für eine Entnahme von der Bremsscheibe freizugeben, wird in umgekehrter Richtung verfahren.

Wenn die genannte Alarmeinrichtung (Platine 47) aktiviert ist, so dient sie zur Erkennung einer Bewegung des Schlosses, wobei im Falle einer detektierten Schlossbewegung mit einer vorbestimmten zeitlichen Verzögerung ein akustisches Alarmsignal ausgegeben wird. Falls beispielsweise der Benutzer des Motorrads das geparkte Motorrad bewegt, um den Ständer einzuklappen, so wird durch diese Bewegung das erläuterte Alarmsignal ausgelöst, so dass der Benutzer nicht vergisst, das Schloss vor dem Losfahren noch von der Bremsscheibe zu lösen. Ferner dient die Alarmeinrichtung zur Abschreckung von Dieben, die das Schloss aufbrechen wollen und bei einem derartigen Versuch das Schloss zwangsläufig bewegen oder erschüttern.

Eine Besonderheit des gezeigten Bremsscheibenschlosses besteht darin, dass die Alarmeinrichtung (über den Kontaktschalter 71), die Bremsscheibenerkennungswippe 41 (mit dem Tastabschnitt 43) und der Verriegelungsmechanismus des Schlosses (mit der Schließkugel 31) dergestalt gekoppelt sind, dass die Alarmeinrichtung nur unter der Voraussetzung aktiviert wird, dass mittels der Bremsscheibenerkennungswippe 41 das Vorhandensein einer Bremsscheibe in dem Aufnahmespalt 21 detektiert wird und dass zugleich der Verriegelungsmechanismus sich in der erläuterten Verriegelungsstellung befindet.

Das Aktivieren der Alarmeinrichtung geschieht wie folgt: Bevor das Schloss auf die betreffende Bremsscheibe aufgesetzt wird, ragt der Tastabschnitt 43 der Bremsscheibenerkennungswippe 41 in den Aufnahmespalt 21 des Schlosskörpers 11 hinein, wie dies in Fig. 1 und 4a gezeigt ist. Die Schalterhalterung 63 mit dem Kontaktschalter 71 befindet sich dementsprechend in einer zurückgezogenen Ruhestellung. Das Federelement 73 des Kontaktschalters 71 ist in dieser Ruhestellung nicht betätigbar, der Kontaktschalter 71 ist ausgeschaltet. Die Energieversorgung der Alarmeinrichtung ist hierdurch noch vollständig unterbrochen. Gegebenenfalls muss der Schließbolzen 25 ausgehend von der in Fig. 1 und 4a gezeigten Schließstellung noch in die Freigabestellung gebracht werden, so dass das Schloss an die Bremsscheibe angelegt werden kann.

Sobald dies geschehen ist, befindet sich die Bremsscheibe in dem Aufnahmespalt 21 des Schlosskörpers 11 und greift an dem Tastabschnitt 43 der Bremsscheibenerkennungswippe 41 an. Diese wird hierdurch aus dem Aufnahmespalt 21 in Richtung des oberen Gehäuseabschnitts 13 des Schlosskörpers 11 in die in Fig. 4b gezeigte Stellung gedrängt. Hierdurch wird eine Relativbewegung der Bremsscheibenerkennungswippe 41 und der Schalterhalterung 63 verursacht, wodurch die Schalterhalterung 63 mit dem Kontaktschalter 71 in die ebenfalls in Fig. 4b gezeigte Bereitschaftsstellung verschwenkt wird.

Diese Schwenkbewegung der Schalterhalterung 63 resultiert aus dem Zusammenwirken des Führungszapfens 67 mit der Führungsbahn 55 der Bremsscheibenerkennungswippe 41. Fig. 3 zeigt die Richtung 81 der Relativbewegung der Führungsbahn 55 bezüglich des Führungszapfens 67. Da der erste Führungsabschnitt 57 der Führungsbahn 55 bezüglich der Bewegungsrichtung 81 schräg geneigt ist, wird durch die Bewegung der Führungsbahn 55 in Richtung der Anlenkrundung 65 der Schalterhalterung 63 eine Seitwärtsbewegung des Führungszapfens 67 und somit eine Schwenkbewegung der Schalterhalterung 63 um die Anlenkrundung 65 bewirkt, so dass hierdurch der Kontaktschalter 71 in die genannte Bereitschaftsstellung verfahren wird. Der zweite Führungsabschnitt 59 der Führungsbahn 55 verläuft im Wesentlichen parallel zu der in Fig. 3 gezeigten Bewegungsrichtung 81, so dass eine weitergehende Bewegung der Führungsbahn 55 relativ zu dem Führungszapfen 67 keine weitere Schwenkbewegung der Schalterhalterung 63 mehr auslöst.

Wenn der Kontaktschalter 71 in der erläuterten Weise in die Bereitschaftsstellung verschwenkt worden ist, greift das Federelement 73 in unbelastetem Zustand in die Durchbrechung 37 der Verriegelungsnut 35 des oberen Gehäuseabschnitts 13 ein. Sofern der Schließbolzen 25 sich noch in der Freigabestellung befindet, ist die Schließkugel 31 - wie bereits erläutert - bezüglich der Verriegelungsnut 35 noch versetzt angeordnet. Das Federelement 73 wird also noch nicht betätigt, der Kontaktschalter 71 ist ausgeschaltet.

Wenn nun aber der Schließbolzen 25 in der bereits erläuterten Weise in die Schließstellung verschoben und gedreht wird, so wird die Schließkugel 31 in die Verriegelungsnut 35 gedrängt. Die Schließkugel 31 betätigt hierdurch das in die Durchbrechung 37 eingreifende Federelement 73, so dass der Kontaktschalter 71 eingeschaltet wird. Dies bewirkt, dass die erläuterte Steuerschaltung der Alarmeinrichtung mit der Batterie verbunden wird, so dass die Alarmeinrichtung nun aktiviert ist. Das Schloss befindet sich nun in dem in Fig. 4b gezeigten Zustand.

Die Steuerschaltung beginnt jetzt, das bereits erläuterte Einschalt-Verzögerungsintervall herunterzuzählen, bis zu dessen Ablauf noch kein Alarmsignal ausgegeben wird.

Für das automatische Aktivieren der Alarmeinrichtung sind der Tastabschnitt 43 der Bremsscheibenerkennungswippe 41 und die Schließkugel 31 über den Kontaktschalter 71 also mechanisch miteinander gekoppelt. Der Vorteil der hierdurch realisierten logischen "UND"-Verknüpfung besteht darin, dass die Alarmeinrichtung stets nur dann aktiviert wird, wenn dies vom Benutzer tatsächlich erwünscht ist. Außerdem erfolgt die Aktivierung - wenn das Schloss an einer Bremsscheibe verriegelt wird - zu einem späten Zeitpunkt, nämlich erst wenn der Schließbolzen 25 tatsächlich in die Verriegelungsstellung gebracht wird bzw. der Schließzylinder 27 vom Benutzer entsprechend betätigt wird. Hierdurch kann das bereits erläuterte Einschalt-Verzögerungsintervall, während dessen nach dem Einschalten der Alarmeinrichtung trotz der Detektion einer Bewegung noch kein Alarmsignal ausgegeben wird, entsprechend kurz gewählt werden.

Um die Alarmeinrichtung des an der Bremsscheibe verriegelten Schlosses wieder zu deaktivieren, muss lediglich der Schlüssel in den Schließzylinder 27 eingeführt werden, um durch entsprechende Drehbetätigung des Schließzylinders 27 die Schließkugel 31 aus der Verriegelungsnut 35 heraus zu bewegen. Hierdurch kann das Federelement 73 wieder unbelastet in die Durchbrechung 37 der Verriegelungsnut 35 eingreifen, und der Kontaktschalter 71 wird ausgeschaltet. Dies bewirkt eine vollständige Unterbrechung der Energieversorgung der Alarmeinrichtung, und die Alarmeinrichtung ist hierdurch deaktiviert.

Für dieses Deaktivieren der Alarmeinrichtung ist also lediglich eine zeitlich kurze Betätigung des Schlosses erforderlich. Insbesondere erfolgt diese Deaktivierung nicht erst mit dem Entfernen der Bremsscheibe aus dem Aufnahmespalt 21. Eine von dem befugten Benutzer vorgenommene Entriegelungsbetätigung kann von dem Bewegungssensor der Alarmeinrichtung zwar detektiert werden. Jedoch kann - wie bereits erläutert - ein Bewegungsdetektions-Verzögerungsintervall zur vorübergehenden Unterdrückung des Alarmsignals vorgesehen sein, das aufgrund des besonders schnellen Ausschaltens des Kontaktschalters 71 entsprechend kurz gewählt werden kann.

Abweichend von der Darstellung in den Figuren kann das erfindungsgemäße Schloss auch als ein Klobenschloss ausgebildet sein, wie eingangs erläutert.

### Bezugszeichenliste

- 11: Schlosskörper
- 13: oberer Gehäuseabschnitt
- 15: unterer Gehäuseabschnitt
- 17: hinterer Längsabschnitt
- 19: vorderer Längsabschnitt
- 21: Aufnahmespalt
- 25: Schließbolzen
- 27: Schließzylinder
- 29: Mitnehmer
- 31: Schließkugel
- 33: Bohrung
- 35: Verriegelungsnut
- 37: Durchbrechung
- 39: Riegelabschnitt
- 41: Bremsscheibenerkennungswippe
- 43: Tastabschnitt
- 45: Gehäuseabschnitt
- 47: Platine
- 49: Anlenkansatz
- 51: Lagerungsabsatz
- 53: Halte- und Führungshaken
- 55: Führungsbahn
- 57: erster Führungsabschnitt
- 59: zweiter Führungsabschnitt
- 61: Federaufnahme
- 63: Schalterhalterung
- 65: Anlenkrundung
- 67: Führungszapfen

- 69: Federaufnahme
- 71: Kontaktschalter
- 73: Federelement
- 75: Batteriegehäuse
- 77: Kabelführungsansatz
- 79: Gewindebohrung
- 81: Relativbewegungsrichtung

## Patentansprüche

1. Bremsscheibenschloss, mit:
- einem Schlosskörper (11), der eine Bremsscheibenaufnahme (21) zur Aufnahme einer Bremsscheibe aufweist;
- einem Verriegelungsmechanismus (31), der wahlweise in eine Verriegelungsstellung oder eine Freigabestellung bringbar ist;
- einem Schließbolzen (25) zum Sichern des Schlosses an der Bremsscheibe, wobei der Schließbolzen an dem Schlosskörper verriegelbar ist, indem der Verriegelungsmechanismus in die Verriegelungsstellung gebracht wird;
- einer Alarmeinrichtung (47) zum Ausgeben eines Alarmsignals, wobei die Alarmeinrichtung einen Bewegungssensor aufweist; und
- einer Bremsscheibenerkennungseinrichtung (41) zur Detektion, ob eine Bremsscheibe sich in der Bremsscheibenaufnahme befindet;
**dadurch gekennzeichnet,**
**dass** die Alarmeinrichtung (47), die Bremsscheibenerkennungseinrichtung (41) und der Verriegelungsmechanismus (31) dergestalt zusammenwirken, dass die Alarmeinrichtung nur unter der Voraussetzung aktiviert ist, dass die Bremsscheibenerkennungseinrichtung das Vorhandensein einer Bremsscheibe in der Bremsscheibenaufnahme (21) detektiert und der Verriegelungsmechanismus in die Verriegelungsstellung gebracht ist.

2. Schloss nach Anspruch 1,
**dadurch gekennzeichnet,**
**dass** das Schloss einen Schalter (71) zum Aktivieren der Alarmeinrichtung aufweist, wobei die Bremsscheibenerkennungseinrichtung (41) mit dem Schalter mechanisch gekoppelt ist und der Schalter mittels des Verriegelungsmechanismus (31) betätigbar ist.

3. Schloss nach Anspruch 2,
**dadurch gekennzeichnet,**
**dass** der Schalter (71) mittels des Verriegelungsmechanismus (31) betätigbar ist, indem der Verriegelungsmechanismus in die Verriegelungsstellung gebracht wird und hierdurch an dem Schalter angreift.

4. Schloss nach einem der Ansprüche 2 oder 3,
**dadurch gekennzeichnet,**
**dass** in der Verriegelungsstellung des Verriegelungsmechanismus ein Verriegelungselement (31) in Eingriff sowohl mit einem Abschnitt (33) des Schließbolzens (25) als auch mit einem Abschnitt (35) des Schlosskörpers (11) gebracht ist, wobei mittels des Verriegelungselements zugleich der Schalter (71) betätigbar ist.

5. Schloss nach einem der Ansprüche 2 bis 4,
**dadurch gekennzeichnet,**
**dass** die Bremsscheibenerkennungseinrichtung (41) einen beweglichen Tastabschnitt (43) aufweist, der in Richtung der Bremsscheibenaufnahme (21) vorgespannt ist und der mit dem Schalter (71) mechanisch gekoppelt ist, wobei durch Einführen einer Bremsscheibe in die Bremsscheibenaufnahme der Tastabschnitt aus der Bremsscheibenaufnahme in Richtung des Schlosskörpers versetzbar ist und der Schalter hierdurch in eine Bereitschaftsstellung bringbar ist, und wobei der Schalter nur in der Bereitschaftsstellung mittels des Verriegelungsmechanismus (31) betätigbar ist.

6. Schloss nach Anspruch 5,
**dadurch gekennzeichnet,**
**dass** der Tastabschnitt (43) bezüglich der Bremsscheibenaufnahme (21) konvex gewölbt ist.

7. Schloss nach Anspruch 6,
**dadurch gekennzeichnet,**
**dass** der konvex gewölbte Tastabschnitt sich entlang zumindest eines Drittels der Länge der Bremsscheibenaufnahme erstreckt.

8. Schloss nach einem der Ansprüche 5 bis 7,
**dadurch gekennzeichnet,**
**dass** der Tastabschnitt (43) als eine einseitig angelenkte ballige Wippe ausgebildet ist.

9. Schloss nach einem der Ansprüche 5 bis 8,
**dadurch gekennzeichnet,**
**dass** der Schalter (71) und der Tastabschnitt (43) der Bremsscheibenerkennungseinrichtung relativ zueinander beweglich gelagert sind, wobei der Schalter und der Tastabschnitt über eine Zwangsführung (55, 67) dergestalt zusammenwirken, dass durch ein Versetzen des Tastabschnitts in Richtung des Schlosskörpers der Schalter (71) zunächst eine Bewegung in Richtung seiner Bereitschaftsstellung ausführt und sich nach Erreichen der Bereitschaftsstellung nur noch geringfügig oder überhaupt nicht mehr bewegt.

10. Schloss nach Anspruch 9,
**dadurch gekennzeichnet,**
**dass** der Schalter (71) an einem Anlenkungspunkt (65) angelenkt ist, und dass als Zwangsführung zumindest eine Führungsbahn (55) und ein hiermit zusammenwirkender Führungszapfen (67) an der Bremsscheibenerkennungseinrichtung einerseits und dem Schalter andererseits vorgesehen sind - oder umgekehrt -, wobei die Führungsbahn zumindest einen ersten Führungsabschnitt (57) und einen zweiten Führungsabschnitt (59) aufweist, und wobei der erste Führungsabschnitt und der zweite Führungsabschnitt bezüglich der Bewegungsrichtung (81) der Führungsbahn (55) relativ zu dem Führungszapfen (67) unterschiedlich geneigt sind.

11. Schloss nach einem der Ansprüche 5 bis 10,
**dadurch gekennzeichnet,**
**dass** der Schalter (71) und der Tastabschnitt (43) relativ zueinander in einander entgegen gesetzter Richtung vorgespannt sind.

12. Schloss nach einem der Ansprüche 5 bis 11,
**dadurch gekennzeichnet,**
**dass** das Schloss eine Energiequelle zur Energieversorgung der Alarmeinrichtung (47) aufweist, wobei durch Ausschalten des Schalters (71) die Energieversorgung der Alarmeinrichtung abschaltbar ist und hierdurch die Alarmeinrichtung deaktivierbar ist.

13. Schloss nach Anspruch 12,
**dadurch gekennzeichnet,**
**dass** die Alarmeinrichtung (47) dergestalt konfiguriert ist, dass durch das Einschalten der Energieversorgung das Abwarten eines vorbestimmten Verzögerungsintervalls auslösbar ist, während dessen kein Alarmsignal ausgebbar ist.

14. Schloss nach einem der vorhergehenden Ansprüche,
**dadurch gekennzeichnet,**
**dass** der Schlosskörper (11) im Wesentlichen U-förmig ausgebildet ist und einen als Bremsscheibenaufnahme dienenden Aufnahmespalt (21) begrenzt.

## Claims

1. A brake disk lock, comprising:
- a lock body (11) having a brake disk receiver (21) for the reception of a brake disk;
- a latching mechanism (31) which can selectively be brought into a latching position or into a release position;
- a locking bolt (25) for the securing of the lock at the brake disk, with the lock bolt being latchable to the lock body in that the latching mechanism is brought into the latching position;
- an alarm device (47) for the output of an alarm signal, with the alarm device having a motion sensor; and
- a brake disk recognition device (41) for detecting whether a brake disk is located in the brake disk receiver,
**characterised in that**
the alarm device (47), the brake disk recognition device (41) and the latching mechanism (31) cooperate such that the alarm device is only activated under the condition that the brake disk recognition device detects the presence of a brake disk in the brake disk receiver (21) and the latching mechanism has been brought into the latching position.

2. A lock in accordance with claim 1, **characterised in that** the lock has a switch (71) for the activation of the alarm device, with the brake disk recognition device (41) being mechanically coupled to the switch and with the switch being actuable by means of the latching mechanism (31).

3. A lock in accordance with claim 2, **characterised in that** the switch (71) is actuable by means of the latching mechanism (31) **in that** the latching mechanism is brought into the latching position and hereby engages at the switch.

4. A lock in accordance with one of the claims 2 or 3, **characterised in that,** in the latching position of the latching mechanism, a latching element (31) is brought into engagement both with a section (33) of the locking bolt (25) and with a section (35) of the lock body (11), with the switch (71) simultaneously being actuable by means of the latching element.

5. A lock in accordance with any one of the claims 2 to 4,
**characterised in that** the brake disk recognition device (41) has a movable sensing section (43) which is biased in the direction of the brake disk receiver (21) and which is mechanically coupled to the switch (71), with the sensing section being movable from the brake disk receiver in the direction of the lock body by introduction of a brake disk into the brake disk receiver and with the switch hereby being able to be brought into a standby position and with the switch only being actuable in the standby position by means of the latching mechanism (31).

6. A lock in accordance with claim 5, **characterised in that** the sensing section (43) is convexly arched with respect to the brake disk receiver (21).

7. A lock in accordance with claim 6, **characterised in that** the convexly arched sensing section extends along at least a third of the length of the brake disk receiver.

8. A lock in accordance with any one of the claims 5 to 7,
**characterised in that** the sensing section (43) is made as a ball-like rocker pivotally connected at one side.

9. A lock in accordance with any one of the claims 5 to 8,
**characterised in that** the switch (71) and the sensing section (43) of the brake disk recognition device are movably supported relative to one another, with the switch and the sensing section cooperating via a compulsory guide (55, 67) such that the switch (71) first carries out a movement in the direction of its standby position by a movement of the sensing section in the direction of the lock body and only moves slightly or no longer moves at all after reaching the standby position.

10. A lock in accordance with claim 9, **characterised in that** the switch (71) is pivotally connected to a pivot point (65); and **in that** at least one guide track (55) is provided as a compulsory guide and a guide spigot (67) cooperating therewith is provided at the brake disk recognition device, on the one hand, and at the switch, on the other hand - or vice versa - with the guide track having at least one first guide section (57) and one second guide section (59), and with the first guide section and the second guide section being differently inclined relative to the guide spigot (67) with respect to the direction of movement (81) of the guide track (55).

11. A lock in accordance with any one of the claims 5 to 10,
**characterised in that** the switch (71) and the sensing section (43) are biased in mutually opposite directions relative to one another.

12. A lock in accordance with any one of the claims 5 to 11,
**characterised in that** the lock has an energy source for the energy supply of the alarm device (47), with the energy supply of the alarm device being able to be shut down by switching off the switch (71) and with the alarm device hereby being able to be deactivated.

13. A lock in accordance with claim 12, **characterised in that** the alarm device (47) is configured such that the waiting for a preset delay interval during which no alarm signal can be output can be triggered by switching on the energy supply.

14. A lock in accordance with any one of the preceding claims,
**characterised in that** the lock body (11) is made essentially in U shape and bounds a receiving gap (21) serving as a brake disk receiver.

## Revendications

1. Cadenas pour disque de frein, comprenant :
- un corps de cadenas (11) qui présente un logement de disque de frein (21) pour loger un disque de frein ;
- un mécanisme de verrouillage (31) qui peut être amené au choix dans une position de verrouillage ou dans une position de libération ;
- un goujon de fermeture (25) pour bloquer le cadenas sur le disque de frein, le goujon de fermeture pouvant être verrouillé sur le corps de cadenas en amenant le mécanisme de verrouillage dans la position de verrouillage ;
- un système d'alarme (47) pour fournir un signal d'alarme, ledit système d'alarme comprenant un détecteur de mouvement ; et
- un système de reconnaissance de disque de frein (41) pour détecter si un disque de frein se trouve dans le logement de disques de frein ;
**caractérisé en ce que**
le système d'alarme (47), le système de reconnaissance de disque de frein (41) et le mécanisme de verrouillage (31) coopèrent ensemble de telle manière que le système d'alarme est activé sous la condition que le système de reconnaissance de disque de frein détecte la présence d'un disque de frein dans le logement de disque de frein (21) et que le mécanisme de verrouillage est amené dans la position de verrouillage.

2. Cadenas selon la revendication 1,
**caractérisé en ce que** le cadenas comprend un commutateur (71) pour activer le système d'alarme, le système de reconnaissance de disque de frein (41) étant couplé mécaniquement avec le commutateur, et le commutateur est susceptible d'être actionné au moyen du mécanisme de verrouillage (31).

3. Cadenas selon la revendication 2,
**caractérisé en ce que** le commutateur (71) est susceptible d'être actionné au moyen de mécanisme de verrouillage (31) **en ce que** le mécanisme de verrouillage est amené dans la position de verrouillage et attaque de ce fait le commutateur.

4. Cadenas selon l'une des revendications 2 ou 3,
**caractérisé en ce que**, dans la position de verrouillage du mécanisme de verrouillage, un élément de verrouillage (31) est amené en engagement à la fois avec un tronçon (33) du goujon de fermeture (25) et avec un tronçon (35) du corps de cadenas (11), le commutateur (71) pouvant être simultanément actionné au moyen de l'élément de verrouillage.

5. Cadenas selon l'une des revendications 2 à 4,
**caractérisé en ce que** le système de reconnaissance de disque de frein (41) comprend un tronçon de palpage mobile (43), lequel est précontraint en direction du logement de disque de frein (21) et est couplé de façon mécanique avec le commutateur (71), de sorte que par introduction d'un disque de frein dans le logement de disque de frein le tronçon de palpage est déplaçable hors du logement de disque de frein en direction du corps de cadenas et le commutateur peut être amené de ce fait jusque dans une position d'attente, et le commutateur ne peut être actionné que dans la position d'attente au moyen du mécanisme de verrouillage (31).

6. Cadenas selon la revendication 5,
**caractérisé en ce que** le tronçon de palpage (48) est bombé de manière convexe par rapport au logement de disque de frein (21).

7. Cadenas selon la revendication 6,
**caractérisé en ce que** le tronçon de palpage bombé de manière convexe s'étend le long d'au moins un tiers de la longueur du logement de disque de frein.

8. Cadenas selon l'une des revendications 5 à 7, **caractérisé en ce que** le tronçon de palpage (48) est réalisé sous la forme d'une bascule bombée articulée sur un seul côté.

9. Cadenas selon l'une des revendications 5 à 8,
**caractérisé en ce que** le commutateur (71) et le tronçon de palpage (43) du système de reconnaissance de disque de frein sont montés mobiles l'un par rapport à l'autre, le commutateur et le tronçon de palpage coopérant ensemble via un guidage forcé (55, 67) de telle manière que par déplacement du tronçon de palpage en direction du corps de cadenas le commutateur (71) exécute tout d'abord un mouvement en direction de sa position d'attente, et ne se déplace que légèrement, voire pas du tout, après avoir atteint la position d'attente.

10. Cadenas selon la revendication 9,
**caractérisé en ce que** le commutateur (71) est articulé au niveau d'un point d'articulation (65), et **en ce qu'**il est prévu à titre de guidage forcé au moins une voie de guidage (55) et un tenon de guidage (67), coopérant avec celle-ci, sur le système de reconnaissance de disque de frein d'une part et sur le commutateur d'autre part, ou inversement, la voie de guidage comprenant au moins un premier tronçon de guidage (57) et un second tronçon de guidage (59), le premier tronçon de guidage et le second tronçon de guidage étant incliné de façon différente par rapport à la direction de déplacement (81) de la voie de guidage (55) par rapport au tenon de guidage (67).

11. Cadenas selon l'une des revendications 5 à 10,
**caractérisé en ce que** le commutateur (71) et le tronçon de palpage (43) sont précontraints l'un par rapport à l'autre dans des directions mutuellement opposées.

12. Cadenas selon l'une des revendications 5 à 11,
**caractérisé en ce que** le cadenas comprend une source d'énergie pour l'alimentation énergétique du système d'alarme (47), de sorte que par coupure du commutateur (71) l'alimentation en énergie du système d'alarme peut être coupée et le système d'alarme peut être de ce fait désactivé.

13. Cadenas selon la revendication 12,
**caractérisé en ce que** le système d'alarme (47) est configuré de telle façon que par mise en marche de l'alimentation en énergie, l'attente d'un intervalle de retard prédéterminé est susceptible d'être déclenchée, pendant laquelle aucun signal d'alarme ne peut être émis.

14. Cadenas selon l'une des revendications précédentes,
**caractérisé en ce que** le corps de cadenas (1) réalisé sensiblement en forme de U et délimite une fente de logement (21) servant de logement de disque de frein.
